# EUROPEAN PATENT APPLICATION

(11) **EP 4 207 335 A2**
(43) Date of publication of application: **05.07.2023**
(21) Application number: 22206850.4
(22) Date of filing: 11.11.2022
(51) Int. Cl.: H01M 4/04, H01M 4/36, H01M 4/62

(54) **ELECTRODE, ELECTROCHEMICAL DEVICE, ELECTRODE TREATMENT METHOD, ELECTRODE MANUFACTURING METHOD, ELECTRODE MANUFACTURING APPARATUS, INSULATING LAYER, AND INSULATING LAYER MANUFACTURING METHOD**

(30) Priority: 20.12.2021 JP 2021206455
(71) Applicant: Ricoh Company, Ltd., Tokyo 143-8555 (JP)
(72) Inventor: Saiga, Takuya, Tokyo, 143-8555 (JP); Higashi, Ryuji, Tokyo, 143-8555 (JP); Matsuoka, Kohji, Tokyo, 143-8555 (JP); Zama, Yuu, Tokyo, 143-8555 (JP); Ohmura, Tomoya, Tokyo, 143-8555 (JP)
(74) Representative: Marks & Clerk LLP

(57) **Abstract**

An electrode includes an electrode substrate, an electrode mixture layer provided on the electrode substrate, and an insulating layer provided on the electrode mixture layer, wherein the insulating layer includes an inorganic oxide, a compound with a terminal hydroxyl group, and an electrolyte.

## Description

### BACKGROUND OF THE INVENTION

### 1. Field of the Invention

The disclosure discussed herein relates to an electrode, an electrochemical device, an electrode treatment method, an electrode manufacturing method, an electrode manufacturing apparatus, an insulating layer, and an insulating layer manufacturing method.

### 2. Description of the Related Art

With the increasing power and capacity of electrochemical devices, safety problems caused by stored energy have become issues. For example, there are cases where a defect or a damaged part is generated inside a battery due to aging of the battery or an external impact, causing a smoke or fire.

As the structure of an electrochemical device, each electrode having a positive electrode and a negative electrode used in an electric storage device such as a secondary battery has an electrode mixture layer formed on an electrode substrate such as a metal foil. To prevent contact between the positive and negative electrodes, a lithium-ion permeable separator is provided between the positive and negative electrodes. Porous films made of resins such as polyethylene and polypropylene are mainly used as separators.

However, resin separators have low heat resistance, and the heat generated upon a short circuit occurring between positive and negative electrodes can readily cause the separators to shrink or melt, thereby allowing the affected short circuit area to spread. As a result, abnormal heating may occur at an accelerated rate, such as when a large electric current is generated to further encourage heat generation, leading to the battery smoking and ignition.

Therefore, a technique for providing a porous insulating layer (Hereafter abbreviated as an "insulating layer") on the surface of an electrode mixture layer using ceramic powder particles as a material different from an electrode active material is known. Such a technique can moderate the spread of the short circuit to prevent heat generation and protect the separator from shrinkage and deterioration (See, e.g., Patent Document 1).

On the other hand, the insulating layer formed by inorganic oxide particles such as ceramic powder particles has scope for improvement in terms of peel strength from a safety perspective. In contrast, a technique for forming an insulating layer containing inorganic oxide particles and a resin binder on the surface of an electrode mixture layer is disclosed (See, e.g., Patent Document 2).

However, in order to inhibit the peeling of inorganic oxide particles, a large amount of resin binder must be added to bind the particles together. If a large amount of resin binder is added, there is a concern that the input-output characteristics of the electrochemical device, and the capacity retention rate, which is the cycle life, may be reduced because the migration of lithium ions in the battery is inhibited, or pores in the insulating layer are blocked.

The present invention is intended to provide an electrode capable of achieving both the strength of an insulating layer on the electrode, and the capacity retention rate.

### SUMMARY OF THE INVENTION

One aspect of an embodiment of the present invention is intended to provide an electrode including an electrode substrate, an electrode mixture layer provided on the electrode substrate, and an insulating layer provided on the electrode mixture layer, wherein the insulating layer contains an inorganic oxide, a compound with a terminal hydroxyl group, and an electrolyte.

### ADVANTAGEOUS EFFECT OF THE INVENTION

According to one aspect of the present invention, it is possible to provide an electrode capable of achieving both the strength of an insulating layer on the electrode, and the capacity retention rate.

### BRIEF DESCRIPTION OF THE DRAWINGS

Fig. 1 is a schematic diagram illustrating a portion of an electrode.
Fig. 2 is a schematic diagram illustrating an example of an electrode.
Fig. 3 is a schematic diagram illustrating a cross section of the electrode in Fig. 2.
Fig. 4 is a schematic diagram illustrating an example of an electrode manufacturing apparatus.
Fig. 5 is a schematic diagram illustrating an example of an electrode manufacturing apparatus.
Fig. 6 is a schematic diagram illustrating an example of an electrochemical device according to the present embodiment.

### DESCRIPTION OF THE PREFERRED EMBODIMENTS

### <Electrode>

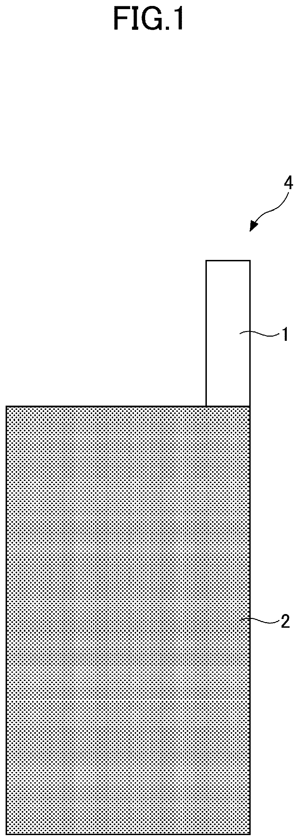

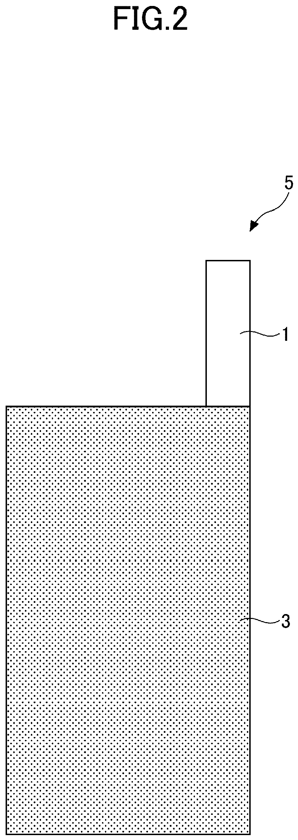

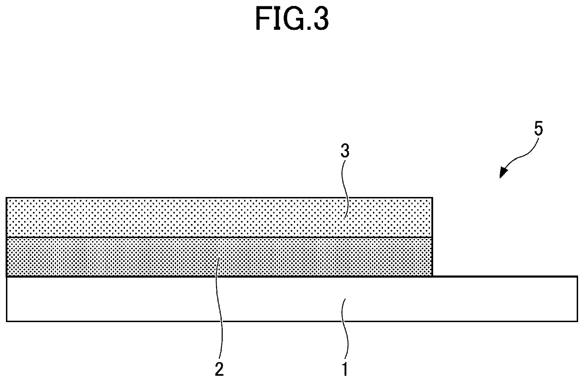

Embodiments of the present invention will be described below. Fig. 1 is a schematic diagram illustrating a portion of an electrode according to the present embodiment, and Fig. 2 and Fig. 3 are schematic diagrams illustrating an example of an electrode according to the present embodiment. An electrode 5 according to the present embodiment has an electrode substrate 1, an electrode mixture layer 2, and an insulating layer 3.

### «Electrode Substrate»

Materials constituting the electrode substrate 1 are not particularly limited as long as the materials are a conductive material, and can be appropriately selected according to the purpose. As the electrode substrate 1, a positive electrode substrate and a negative electrode substrate are given.

Examples of materials constituting the positive electrode substrate include stainless steel, nickel, aluminum, copper, titanium, tantalum, and the like. Among these, stainless steel and aluminum are preferable.

Examples of materials constituting the negative electrode substrate include stainless steel, nickel, aluminum, copper, and the like. Among these, stainless steel and copper are preferable.

There are no particular restrictions on the shape of the electrode substrate 1, and the shape of the electrode substrate 1 can be selected appropriately according to the purpose. The shape of the electrode substrate is preferably thin foil because the electrode active material can be applied to both the front surface and the back surface of the electrode substrate to form an electrode, and multiple electrodes can be layered to increase the battery capacity.

### «Electrode Mixture Layer»

The electrode mixture layer 2 is provided on the electrode substrate 1. The electrode mixture layer 2 can be formed by applying a slurry-like electrode mixture liquid containing an active material on the electrode substrate 1. In the present embodiment, the electrode mixture layer 2 is provided on the electrode substrate 1 to form an electrode element 4 (Fig. 1). The electrode mixture liquid contains an active material, a dispersion medium, and may contain a conductive aid, a dispersant, and the like, as required.

As the active material, a positive electrode active material or a negative electrode active material can be used. The positive electrode active material or the negative electrode active material may be used alone or in combination.

There are no particular restrictions for materials to be used as the positive electrode active material insofar as alkali metal ions can be inserted or released, and alkali metal-containing transition metal compounds can be used, for example.

The alkali metal-containing transition metal compounds include, for example, lithium-containing transition metal compounds such as complex oxides containing lithium and one or more elements selected from the group consisting of cobalt, manganese, nickel, chromium, iron and vanadium.

The lithium-containing transition metal compounds include, for example, lithium cobaltate, lithium nickelate, lithium manganate and the like.

As the alkali metal-containing transition metal compounds, polyanionic compounds having XO₄ tetrahedra (X = P, S, As, Mo, W, Si, etc.) in their crystal structure can also be used. Among these, lithium-containing transition metal phosphate compounds such as lithium iron phosphate and lithium vanadium phosphate are preferable in terms of cycle characteristics, and lithium vanadium phosphate is particularly preferable in terms of lithium diffusion coefficient and cycle life.

In view of electronic conductivity, it is preferable that the polyanionic compounds have their surfaces covered with a conductive aid such as a carbon material.

For example, as the alkali-metal-containing transition metal compounds, a lithium Ni complex oxide of LiNi_{X}Co_{Y}Mn_{Z}O₂ (x + y + z = 1), a lithium phosphate-based material having a basic framework of Li_{X}Me_{Y}(PO₄)_{Z} (0.5 < x < 4, Me = transition metal, 0.5 < y < 2.5, 0.5 < x < 3.5), and the like can be used.

For example, LiNi_{0.33}CO_{0.33}Mn_{0.33}O₂, LiNi_{0.5}CO_{0.2}Mn_{0.3}O₂, LiNi_{0.6}Co_{0.2}Mn_{0.2}O₂, LiNi_{0.8}Co_{0.2}Mn₀O₂, and the like are given as lithium Ni complex oxides which are LiNi_{X}Co_{Y}Mn_{Z}O₂ (x + y + z = 1).

Lithium phosphate-based materials having Li_{X}Me_{Y}(PO₄)_{Z} (0.5 < x < 4, Me = transition metal, 0.5 < y < 2.5, 0.5 < x < 3.5) as the basic framework include, for example, lithium vanadium phosphate (Li₃V₂(PO₄)₃), olivine iron (LiFePO₄), olivine manganese (LiMnPO₄), olivine cobalt (LiCoPO₄), olivine nickel (LiNiPO₄), olivine vanadium (LiVOPO₄), and similar compounds having the above as the basic framework and doped with different elements.

As the negative electrode active material, carbon materials including graphite with graphite-type crystal structure can be used, although there is no restriction as long as the materials are capable of inserting or releasing alkali metal ions.

Examples of carbon materials include natural graphite, artificial graphite, graphite such as coke (graphite), not-easily graphitizable carbon (hard carbon), easily graphitizable carbon (soft carbon), amorphous carbon, and the like. Among these, artificial graphite, natural graphite and amorphous carbon are particularly preferable.

In view of the energy density of the nonaqueous storage device, high-capacity materials such as silicon, tin, Si alloy, tin alloy, silicon oxide, silicon nitride, and tin oxide may be used as the negative electrode active material.

As the dispersant, for example, water, ethylene glycol, propylene glycol, N-methyl-2 pyrrolidone, 2-pyrrolidone, cyclohexanone, butyl acetate, mesitylene, 2-n-butoxymethanol, 2-dimethylethanol, N,N-dimethylacetamide, and the like, may be used in combination.

As the conductive aid, for example, conductive carbon black manufactured by the furnace method, acetylene method, gasification method, and the like, or carbon materials such as carbon nanofibers, carbon nanotubes, graphene, and graphite particles can be used. For example, metal particles and metal fibers such as aluminum can be used as conductive aids other than carbon materials. The conductive aid may be compounded with the active material in advance.

Dispersants include, for example, polycarboxylic acid dispersants, naphthalenesulfonate formalin condensation dispersants, polyethylene glycol, polycarboxylic acid partial alkyl ester dispersants, polyether dispersants, polyalkylene polyamine dispersants and other polymer dispersants, alkyl sulfonic acid dispersants, quaternary ammonium salt dispersants, higher alcohol alkylene oxide dispersants, polyalcohol ester dispersants, surfactants such as alkyl polyamine dispersants, and inorganic dispersants such as polyphosphate dispersants.

### <<Insulating Layer>>

The insulating layer 3 is provided on the electrode mixture layer 2. The insulating layer 3 is formed by coating the electrode mixture layer 2 with a liquid composition (Hereafter referred to as a liquid composition for forming an insulating layer or a liquid composition for an insulating layer) for forming an insulating layer containing a compound with a terminal hydroxyl group and inorganic oxide particles. In the present embodiment, the insulating layer 3 is formed on the electrode element 4, thereby forming an electrode 5 (Fig. 2, and Fig. 3).

The liquid composition for an insulating layer contains an inorganic oxide, a compound with a terminal hydroxyl group, and an electrolyte, and optionally a solvent, a dispersant, and the like, as required.

Inorganic oxides are composed of inorganic oxide particles. The inorganic oxide particles include metal oxides with high electrical insulation.

Metal oxides include, for example, materials derived from mineral resources such as aluminum oxide, titanium dioxide, barium titanate, zirconium dioxide, nickel oxide, manganese oxide, vanadium dioxide, silicon dioxide, zeolite, or artifacts thereof. Among these, aluminum oxide and titanium dioxide are preferable, and aluminum oxide is more preferable, from the viewpoint of the magnitude of electrical resistance and stability.

These inorganic oxide particles may be used alone or in combination, according to the purpose.

Commercially available products of aluminum oxides include, for example, AKP-15, AKP-20, AKP-30, AKP-50, AKP-53, AKP-700, AKP-3000, AA-03, AA-04, AA-05, AA-07, AKP-G07, AKP-G15 manufactured by Sumitomo Chemical Co., Ltd. as high-purity alumina, and TM-DA, TM-DAR, and TM-5D manufactured by Daimei Chemicals Co., Ltd.

The volume average particle size of the inorganic oxide particles is preferably 10 µm or less, and more preferably 3 µm or less. Here, the volume average particle size indicates the average primary particle size (D50) at a volume integration of 50% in the particle size distribution determined by the laser diffraction and scattering method.

When the volume average particle size of the inorganic oxide particles is in such a range, the filling rate of the inorganic oxide particles in the insulating layer can be increased. As a result, there are more contacts between inorganic oxide particles, and the strength of the insulating layer can be increased. Here, the contact point between the inorganic oxide particles may be the contact point between the inorganic oxide particles and the inorganic oxide, or the contact point when the binder is interposed between the inorganic oxide particles and the inorganic oxide.

The inorganic oxide content in the liquid composition for the insulating layer is preferably 15 mass% or more and 60 mass% or less, from the viewpoint of forming a thin and uniform insulating layer.

Compounds with terminal hydroxyl groups are compounds that have one or more hydroxyl groups (-OH) at an end of a molecular structure or at an end of a functional group in the main or side chain of a polymer. By selecting a suitable compound from compounds dissolved in the liquid composition for the insulating layer, and adding the selected compound, it functions as a binder between inorganic oxide particles in the insulating layer to increase the strength. In this case, the hydroxyl group (-OH) can be present as a hydroxy group, or as a hydroxyl group in a functional group such as a carboxyl group.

In addition, from the viewpoint of increasing the bonding property of the insulating layer with respect to the electrode mixture layer, it is preferable that the compound with a terminal hydroxyl group be a compound that has a hydroxyl group at two or more ends in a molecule, and it is even more preferable that the compound be an organic compound such as a polyol compound having a chain structure of terminal hydroxyl groups.

Furthermore, in order to improve the bonding property of the insulating layer, it is preferable that a terminal structure of the compound with a terminal hydroxyl group is a block copolymer having a structure represented by general formula (1) (n = 2 or more), and it is even more preferable that the structure is represented by general formula (2).

-(O-C₂H₄-O)ₙ-H ----- (1)

-O-C₂H₄-OH ----- (2)

Examples of polyol-based compounds include polyether polyol, polyester polyol, polycarbonate polyol, polyolefin polyol, polybutadiene polyol, (meth)acrylic polyol, polysiloxane polyol, and the like.

Examples of polyether polyols include oxyalkylene structure-containing compounds such as polyethylene oxide, polypropylene oxide, polytetramethylene oxide, polybutylene oxide, polyhexamethylene oxide, and the like.

A repeating structure of oxyalkylene groups in polyether polyols preferably contains a structure composed of polyethylene oxide because the structure composed of polyethylene oxide increases the binding property of inorganic oxide particles. The inclusion of polyethylene oxide is preferable because the bonding property is good, and the effect on the battery characteristics is relatively small.

Examples of the polyester polyols include a condensation polymer of a polyalcohol with a polyvalent carboxylic acid, a ring-opening polymer of a cyclic ester, and the like.

Herein, a polyalcohol includes, for example, ethylene glycol, diethylene glycol, propylene glycol, dipropylene glycol, neopentyl glycol, 1,2-butanediol, 1,3-butanediol, 2,3-butanediol, 1,4-butanediol, 1,5-pentanediol, 1,6-hexanediol, 3-methyl-1, 5-pentanediol, 1,8-octanediol, 1,9-nonanediol, trimethylene glycol, 1,4-tetramethylene glycol, dipropylene glycol, 1,3-tetramethylene diol, 2-methyl-1, 3-trimethylene diol, 2,4-diethyl-1, 5-pentamethylene diol, hydrogenated bisphenol A, 1,4-cyclohexanediol, 1,4-cyclohexanedimethanol, glycerin, and the like.

The polyvalent carboxylic acids include, for example, malonic acid, maleic acid, fumaric acid, succinic acid, glutaric acid, adipic acid, 1,4-cyclohexanedicarboxylic acid, terephthalic acid, isophthalic acid, orthophthalic acid, 2,6-naphthalenedicarboxylic acid, paraphenylenedicarboxylic acid, trimellitic acid, and the like.

Cyclic esters include, for example, propiolactone, β-methyl-δ-valerolactone, ε-caprolactone, and the like.

Polycarbonate polyols include, for example, reactants of polyalcohols with phosgene, and transesterification reactants of carbonates (alkylene carbonates) and polyalcohols.

Here, diols and the like with the low molecular weight can be cited as polyalcohols.

Examples of alkylene carbonates include ethylene carbonate, dimethyl carbonate, diethyl carbonate, di-n-propyl carbonate, diisopropyl carbonate, dibutyl carbonate, dicyclohexyl carbonate, diphenyl carbonate, and the like.

The polycarbonate polyol may be a compound with a carbonate bond in a molecule and terminal hydroxyl groups, and may have an ester bond along with the carbonate bond.

Examples of polyolefin polyols include those having homopolymers or copolymers such as ethylene and propylene as saturated hydrocarbon frameworks, and having a hydroxyl group at an end of a molecule.

Examples of polybutadiene polyols include those having butadiene copolymers as hydrocarbon frameworks, and hydroxyl groups at an end of a molecule. The polybutadiene polyols may be hydrated polybutadiene polyols in which all or part of the ethylenically unsaturated groups contained in their structure are hydrogenated.

Examples of (meth)acrylic polyols include those having at least two hydroxyl groups in the molecule of a polymer or copolymer of (meth)acrylate.

Examples of (meth)acrylates include (meth)acrylic acid alkyl esters such as (meth)methyl acrylate, (meth)ethyl acrylate, (meth)propyl acrylate, (meth)butyl acrylate, (meth)hexyl acrylate, (meth)octyl acrylate, 2-ethylhexyl (meth)acrylate, (meth)decyl acrylate, (meth)dodecyl acrylate, (meth)octadecyl acrylate, and the like.

Examples of polysiloxane polyols include polyols having dimethylpolysiloxane, methylphenylpolysiloxane, diphenylpolysiloxane or the like in the main chain, and having both ends modified to hydroxyl groups.

The compounds with terminal hydroxyl groups may be used alone or in combination with two or more selected compounds. In addition, two or more random or block copolymers may be used for the compounds with terminal hydroxyl groups, or commercially available products may be used.

Commercially available products of compounds with terminal hydroxyl groups include, for example, T5652, T5650J, T5650E, G4672, and T4671 manufactured by Asahi Kasei Corporation as polycarbonate diols, ETERNACOLL (Registered trademark) UH-50, UH-100, UH-200, PH-50, PH-100, and PH-200 manufactured by Ube Industries, Ltd., G-1000, G-2000, and G-3000 manufactured by Nippon Soda Co., Ltd. as both-end hydroxyl group-terminated polybutadienes, GI-1000, GI-2000, and GI-3000 manufactured by Nippon Soda Co., Ltd. as both-end hydroxyl group-terminated hydrogenated polybutadienes, Emulgen (Registered trademark) PP-290 manufactured by Kao Corporation as polyoxyethylene polyoxypropylene glycol, Neupol (Registered trademark) PE manufactured by Sanyo Industries, Pronon (Registered trademark) #104, Pronon #202B, and Pronon #204 manufactured by NOF Corporation, Epan (Registered trademark) 410, Epan 420, Epan 450, Epan 485, Epan 680, Epan 710, Epan 720, Epan 740, Epan 750, Epan 785, Epan U-103, Epan U-105, and Epan U-108 manufactured by Daiichi Kogyo Pharmaceutical Co., Uniol (Registered trademark) PB-500 and PB-700 manufactured by NOF Corporation as polybutylene glycol, DMS-C15, DMS-C-290, DMS-C16, DMS-C21, and DMS-C23 manufactured by Gelest Inc. as terminal modified polydimethylsiloxane, and [A = ethylene oxide, B = dimethylsiloxane] DBE-C25, and [A = propylene oxide, B = dimethylsiloxane] DBP-C22 manufactured by Gelest Inc. as A-B-A triblock copolymers.

The molecular weight of a compound with a terminal hydroxyl group is preferably 200 or more, more preferably 400 or more, still more preferably 1000 or more, and even more preferably 2000 or more, from the viewpoint of increasing the bonding property between inorganic oxide particles in the insulating layer and the strength of the insulating layer.

The amount of the compound with a terminal hydroxyl group added to the inorganic oxide particles is preferably 0.5 mass% or more and 10 mass% or less, more preferably 0.7 mass% or more and 5 mass% or less. When the amount of the compound with a terminal hydroxyl group added is 0.5 mass% or more, the bonding ability of inorganic oxide particles increases and the strength of the insulating layer increases, and when the amount of the compound with a terminal hydroxyl group added is 10 mass% or less, the ion permeability is maintained without blocking of the porous nature of the insulating layer, thereby improving the cycle life and cycle characteristics.

An electrolyte to be used is not particularly limited. Cations constituting an electrolyte include lithium ions, sodium ions, potassium ions, and the like. Among these, lithium ions are preferable because of the lifetime of the electrochemical device and the large increase in the strength of the insulating layer.

Alkali metal salts of strong acids consisting of fluorine-containing anions are preferable as electrolytes, and can be selected according to the purpose. Examples include lithium hexafluorophosphate (LiPFe), lithium tetrafluoroborate (LiBF₄), lithium hexafluoroarsenate (LiAsF₆), lithium trifluoromethanesulfonate (CF₃SO₃Li), lithium bis(trifluoromethylsulfonyl)imide (Li[(CF₃SO₂)₂N]), and lithium bis(pentafluoroethylsulfonyl)imide (Li[(C₂F₅SO₂)₂N]).

These electrolytes may be used alone or in combination of two or more. Among these, lithium hexafluorophosphate (LiPFe) is preferable from the viewpoint of increasing the strength of the insulating layer. The increase in the strength of the insulating layer by lithium hexafluorophosphate (LiPFe) is considered to be due to the reactivity of LiPF₆ to compounds with terminal hydroxyl groups.

As solvents used for the liquid composition for an insulating layer, water, hydrocarbon solvents, alcohol solvents, ketone solvents, ester solvents, and ether solvents can be used, as long as the solvents can disperse the inorganic oxide particles.

Specific examples of solvents include water, N-methyl-2 pyrrolidone, dimethyl sulfoxide, ethyl lactate, methyl ethyl ketone, 2-heptanone, diacetone alcohol, isopropyl alcohol, diisobutyl ketone, cyclohexanone, butyl acetate, isopropyl glycol, propylene glycol, ethylene glycol, hexylene glycol, 1-propoxy-2 propanol, 2-pyrrolidone, triethylene glycol, diethylene glycol, diethylene glycol monomethyl ether, diethylene glycol monoethyl ether, and the like.

The dispersant is not particularly limited, but from the viewpoint of dispersing the inorganic oxide uniformly in the solvent, it is preferable to use a dispersant such as a surfactant or a polymer compound having an adsorption group.

Commercially available dispersants include, for example, Megafac (Registered trademark) F173, Megafac F444 and Megafac F470 manufactured by DIC Corporation, Marialim (Registered trademark) AAB-0851, Marialim AFB-1521, Marialim AKM-0531, Marialim AWS-0851, Marialim HKM-50A, Marialim SC-0708 A, Marialim SC-0505 K, and Marialim SC-1015F manufactured by NOF Corporation, and Disper BYK 103 and Disper BYK 2000 manufactured by BYK-Chemie GmbH.

The liquid composition for an insulating layer may also contain other additives such as thickeners, surfactants, preservatives, antifungal agents, and the like, as required.

In addition, for example, from the viewpoint of dischargeability when the liquid composition for an insulating layer according to the present embodiment is discharged by an inkjet method described later, the viscosity of the liquid composition for an insulating layer is preferably in the range of 5.0 mPa·s or more and 30 mPa·s or less, and the surface tension is preferably in the range of 15 to 40 mN/m.

As a method of producing a liquid composition for an insulating layer, it is preferable, although not particularly limited, that the inorganic oxide particles be uniformly dispersed in the solvent. For example, the liquid composition for an insulating layer can be manufactured by adding inorganic oxide particles into a solvent A, obtaining a dispersion using a disperser, and diluting the dispersion with a solvent B in which a compound having a terminal hydroxyl group and other additives are dissolved. The same or different solvents may be used for solvent A and solvent B.

The dispersion is produced by pre-stirring a solvent, inorganic oxide particles, and a dispersant and then using a disperser. As a disperser, a homomixer, a homogenizer, an ultrasonic disperser, a ball mill, a bead mill, a cavitation mill or the like can be used according to the purpose.

In the electrode according to the present embodiment, as described above, the insulating layer provided on the electrode mixture layer contains an inorganic oxide, a compound with a terminal hydroxyl group, and an electrolyte. This improves the bonding property of the insulating layer to the electrode mixture layer, and improves the peeling strength of the insulating layer provided on the electrode. In the electrode according to the present embodiment, the use of the electrode in the electrochemical device enables the electrochemical device to maintain a high charge-discharge capacity.

### <Electrode Insulating Layer>

An insulating layer for an electrode according to the present embodiment (hereinafter referred to as an "electrode insulating layer") is provided on an electrode mixture layer 2 of an electrode element 4. The electrode element 4 includes an electrode substrate 1 and the electrode mixture layer 2 provided on the electrode substrate 1. The electrode insulating layer contains an inorganic oxide, a compound having a terminal hydroxyl group, and an electrolyte. The electrode insulating layer according to the present embodiment corresponds to the insulating layer 3 constituting the electrode in the present embodiment (see Figs. 1 to 3).

Specifically, the electrode insulating layer according to the present embodiment can constitute an insulating layer that is provided on the electrode mixture layer, and contains inorganic oxide, a compound with a terminal hydroxyl group, and an electrolyte.

As a result, the electrode insulating layer according to the present embodiment can improve the bonding property with respect to the electrode mixture layer, and can improve the peeling strength of the insulating layer provided on the electrode. In addition, since the electrode having the electrode insulating layer according to the present embodiment is provided on the electrode mixture layer, the use of the electrode in the electrochemical device enables the electrochemical device to maintain a high charge-discharge capacity.

### <Electrode Manufacturing Method and Electrode Treatment Method>

A method of manufacturing an electrode according to the present embodiment (also referred to as an "electrode manufacturing method") includes a step of forming an electrode mixture layer on an electrode substrate (Hereafter referred to as an "electrode mixture layer forming step"), a step of forming an insulating layer (Hereafter referred to as an "insulating layer forming step"), and a step of treating the insulating layer (hereinafter referred to as a "treating step").

A method of treating an electrode according to the present embodiment(also referred to as an "electrode treatment method") includes a treating step of treating an electrode with a treatment solution, the treatment solution containing an electrolyte and a nonaqueous solvent, where the electrode includes an electrode substrate, an electrode mixture layer provided on the electrode substrate, and an insulating layer provided on the electrode mixture layer, the insulating layer containing an inorganic oxide and a compound with a terminal hydroxyl group. The electrode treatment method according to the present embodiment corresponds to the treating step constituting the electrode manufacturing method.

### «Electrode Mixture Layer Forming step»

In the electrode mixture layer forming step, an electrode mixture layer is formed on the electrode substrate. Specifically, when manufacturing a positive electrode, a liquid composition for an electrode mixture layer (liquid composition for a positive electrode mixture layer) is applied to a positive electrode substrate to form a positive electrode mixture layer on the positive electrode substrate. When manufacturing a negative electrode, a liquid composition for an electrode mixture layer (liquid composition for the negative electrode mixture layer) is applied to a negative electrode substrate to form a negative electrode mixture layer on the negative electrode substrate.

As a method of applying a liquid composition for an electrode mixture layer, for example, a comma coater method, a die coater method, a curtain coating method, a spray coating method, a liquid discharge method (Inkjet method, IJ method) or the like can be used.

A heating mechanism may be provided to dry the solvent after the liquid composition for an electrode mixture layer is applied.

There are no particular restrictions on the heating mechanism, but a method of heating the liquid composition applied on the surface with a resistance heating heater, an infrared heater, a fan heater, and the like, or a method of drying from the back side of the liquid composition applied surface with a hot plate, drum heater, and the like, may be used, for example. From the viewpoint of uniformly heating and drying of the surface to which the liquid composition is applied, a resistance heating heater, an infrared heater, and a fan heater that can dry the liquid composition applied on the surface without contact are preferable. One of these heating mechanisms may be used, or two or more of these heating mechanisms may be used in combination according to the purpose.

Although there is no particular limitation to the heating temperature, it is preferable that the temperature be in the range of 70°C or more and 150°C or less, from the viewpoint of protecting the electrode substrate and the active material of the electrode mixture layer.

When the electrode mixture layer is a negative electrode mixture layer, the mean thickness of the negative electrode mixture layer is preferably 10 to 450 µm and more preferably 20 to 100 µm. When the mean thickness of the negative electrode mixture layer is 10 µm or more, the energy density of the electrochemical device is improved, and when it is 450 µm or less, the cycling characteristics of the electrochemical device is improved.

When the electrode mixture layer is a positive electrode mixture layer, the mean thickness of the positive electrode mixture layer is preferably 10 to 300 µm and more preferably 40 to 150 µm. When the mean thickness of the positive electrode mixture layer is 20 µm or more, the energy density of the electrochemical device is improved, and when it is 300 µm or less, the load characteristics of the electrochemical device are improved.

The electrode mixture layer may be formed on both sides of the electrode substrate (positive electrode substrate and/or negative electrode substrate).

The electrodes may be multilayered to increase the charge-discharge capacity of the electrodes. There is no particular limitation to the number of layers of positive or negative electrodes, and the number of layers can be increased as required.

### <<Insulating Layer Forming Step>>

In the insulating layer forming step, a liquid composition for forming an insulating layer is applied onto an electrode mixture layer to provide an insulating layer, where the liquid composition contains an inorganic oxide, and a compound with a terminal hydroxyl group. Specifically, when manufacturing a positive electrode, a liquid composition for an insulating layer is applied on the positive electrode mixture layer. When manufacturing a negative electrode, a liquid composition for an insulating layer is applied on the negative electrode mixture layer.

As a method of applying a liquid composition for an insulating layer, for example, a comma coater method, a die coater method, a curtain coating method, a spray coating method, a liquid discharge method (Inkjet method, IJ method) or the like can be used. Among these, liquid discharge methods such as an inkjet method, which can be applied on an on-demand basis without contacting the electrode mixture layer, are preferable.

The insulating layer preferably covers at least 90% of the surface of the electrode mixture layer opposite to the surface on the electrode substrate side. Such a range provides good insulation to the electrode.

In addition, it is more preferable that the insulating layer covers a range of 90% or more and less than 100% of the surface of the electrode mixture layer opposite to the surface on the electrode substrate side. With the insulating layer covering such a range of the surface, it is possible to provide an electrochemical device with high power and/or capacity retention rate while keeping good insulation in the electrode.

A heating mechanism may be provided in order to dry a solvent after the liquid composition for an insulating layer is applied.

Although there are no particular restrictions on the heating mechanism, one or more types of heaters may be selected according to the purpose from heaters similar to the example used in the electrode mixture layer forming step described above.

The heating temperature is not particularly limited, and is preferably in the range of 70°C or more and 150°C or less. The heating temperature of 70°C or more is preferable because the strength increases with heating of the insulating layer, and the heating temperature of 150°C or less is preferable because such temperatures prevent bubbles on the surface of the insulating layer derived from explosive boil.

Thereafter, the electrode substrate on which the electrode mixture layer and the insulating layer are formed is cut to a desired size by punching or the like to form electrodes.

The insulating layer may be formed on both sides of the electrode mixture layer (positive electrode mixture layer and/or negative electrode mixture layer).

### «Treating Step»

In a treating step, the electrode on which the insulating layer obtained in the insulating layer forming step is formed is treated with a treatment solution. The treatment solution contains an electrolyte and a nonaqueous solvent. Specifically, the electrode including the insulating layer is impregnated with a nonaqueous solvent (hereinafter referred to as a treatment solution). The nonaqueous solvent contains an electrolyte.

In the electrode treatment method (i.e., the treating step) according to the present embodiment, when the electrode is treated with a treatment solution, a component such as a wetting liquid remaining in the insulating layer can be replaced with a nonaqueous solvent. This can enhance the strength of the insulating layer. In addition, in the present embodiment, the electrode including the insulating layer can be treated with the treatment solution by simply impregnating the electrode with the treatment solution. Thus, the enhancement of the strength of the insulating layer is simpler.

Treatment in the treating step may be carried out by impregnation or application using spray coating or the like. The treatment solution may be a solution of the same composition as an electrolytic solution used for a battery element. The treating step can also be performed after assembling the electrochemical device described below. Specifically, a voltage may be applied to the electrochemical device in a state where the electrode element is sealed by an external package together with the electrolyte as described later.

Further, in the treating step, it is preferable that a voltage be applied to the electrode while the electrode is impregnated with the treatment solution, and the like, because the bonding property of the inorganic oxide particles in the insulating layer is increased, and the strength is enhanced by the compound with a terminal hydroxyl group, and the electrolyte. The voltage is applied in a manner such that the electrode is opposite to an electrically conductive electrode (counter electrode) through a separator (isolation layer) described later.

The voltage applied is preferably 2.0 V or more, and more preferably 3.0 V or more. The voltage applied being 2.0 V or more is preferable because the increase in the strength of the insulating layer progresses sufficiently.

### «Treatment Solution»

The treatment solution for the insulating layer is a solution containing a nonaqueous solvent, and an electrolyte.

### «Nonaqueous Solvent»

As the nonaqueous solvent, there are no particular restrictions as long as the electrolyte is soluble, and it is preferable to use an aprotic organic solvent.

As the aprotic organic solvent, carbonate-based organic solvents such as a chain carbonate and a cyclic carbonate can be used. Among these, it is preferable to contain a chain carbonate because of the high solubility of the electrolyte salt.

Examples of the chain carbonates include dimethyl carbonate (DMC), diethyl carbonate (DEC), and methyl ethyl carbonate (EMC). Examples of the cyclic carbonates include propylene carbonate (PC), ethylene carbonate (EC), butylene carbonate (BC), and vinylene carbonate (VC).

As the nonaqueous solvent other than the carbonate-based organic solvent, for example, an ester-based organic solvent such as a cyclic ester or a chain ester, or an ether-based organic solvent such as a cyclic ether or a chain ether can be used.

Examples of the cyclic ester include, for example, γ-butyrolactone (yBL), 2-methyl-γ-butyrolactone, acetyl-γ-butyrolactone, γ-valerolactone, and the like.

Examples of the chain ester include alkyl propionate, dialkyl malonate, alkyl acetate (e.g., methyl acetate (MA), ethyl acetate), alkyl formate (e.g., methyl formate (MF), ethyl formate) and the like.

Examples of the cyclic ether include tetrahydrofuran, alkyltetrahydrofuran, alkoxytetrahydrofuran, dialkoxytetrahydrofuran, 1,3-dioxolane, alkyl-1, 3-dioxolane, 1,4-dioxolane, and the like.

Examples of the chain ether include 1,2-dimethoxyethane (DME), diethyl ether, ethylene glycol dialkyl ether, diethylene glycol dialkyl ether, triethylene glycol dialkyl ether, tetraethylene glycol dialkyl ether, and the like.

The content of the chain carbonate in the nonaqueous solvent is preferably 50 mass% or more.

When the content of the chain carbonate in the nonaqueous solvent is 50 mass% or more, the content of the cyclic material decreases even when the nonaqueous solvent other than the chain carbonate is a cyclic material with a high dielectric constant (e.g., cyclic carbonates, cyclic esters). Hence, even when a highly concentrated electrolyte of 2 M or more is prepared, the viscosity can be kept low, resulting in good permeability and ion diffusivity to the insulating layer.

### «Electrolyte»

As the electrolyte, there are no particular restrictions as long as the electrolyte has high ionic conductivity and can be dissolved in nonaqueous solvents.

As for the cations constituting the electrolyte, a lithium ion or the like can be given, as in the electrolyte contained in the insulating layer constituting the electrode described above. Among these, a lithium ion is preferable from the viewpoint of the lifetime of the electrochemical device and the large increase in the strength of the insulating layer.

Lithium hexafluorophosphate (LiPF₆) or the like can be given as the electrolyte, as in the electrolyte contained in the insulating layer constituting the electrode described above, and these may be used alone or in combination of two or more. Among these, lithium hexafluorophosphate (LiPFe) is preferable.

The concentration of the electrolyte in the treatment solution is preferably 0.7 mol/L or more. When the concentration of the electrolyte in the treatment solution is 0.7 mol/L or more, a sufficient amount of the electrolyte can be included in the insulating layer to increase the strength of the insulating layer.

### «Additives»

The treatment solution may optionally contain additives. Examples of the additives include ethylene carbonate, and vinylene carbonate. The inclusion of additives is preferable to improve the cycle life of a composite electrode.

The method of manufacturing an electrode according to the present embodiment includes, as described above, an insulating layer forming step of applying a liquid composition for forming an insulating layer onto an electrode mixture layer of an electrode element, the electrode element including an electrode substrate and the electrode mixture layer provided on the electrode substrate, thereby forming an insulating layer on the electrode mixture layer of the electrode element. Furthermore, the method of manufacturing an electrode includes a treating step of treating the electrode including the insulating layer with a treatment solution, where the insulating layer is formed in the insulating layer forming step, and the treatment solution contains an electrolyte and a nonaqueous solvent.

Thus, in the method of manufacturing an electrode according to the present embodiment, the insulating layer containing an inorganic oxide, a compound with a terminal hydroxyl group, and an electrolyte can be provided on the electrode mixture layer. The electrode thus obtained can improve the bonding property of the insulating layer with respect to the electrode mixture layer, and can improve the peeling strength of the insulating layer provided on the electrode. Moreover, the use of such an electrode in an electrochemical device enables the electrochemical device to maintain a high charge-discharge capacity.

### <Electrode Insulating Layer Manufacturing Method>

A method of manufacturing an insulating layer for an electrode (also referred to as "electrode insulating layer manufacturing method") in the present embodiment includes:
an insulating layer forming step of applying a liquid composition for forming an insulating layer on an electrode mixture layer of an electrode element to form an insulating layer, where the liquid composition contains an inorganic oxide, and a compound with a terminal hydroxyl group, where the electrode element includes an electrode substrate and the electrode mixture layer provided on the electrode substrate; and
a treating step of treating an electrode including the insulating layer with a treatment solution, where the treatment solution contains an electrolyte and a nonaqueous solvent, and where the insulating layer is obtained in the insulating layer forming step.

The insulating layer forming step in the method of manufacturing an insulating layer for an electrode corresponds to the insulating layer forming step constituting the method of manufacturing an electrode described above. The treating step in the method of manufacturing an insulating layer for an electrode corresponds to the treating step constituting the method of manufacturing an electrode described above.

The method of manufacturing an insulating layer for an electrode according to the present embodiment includes the insulating layer forming step as described above to apply a liquid composition for forming an insulating layer onto an electrode mixture layer of an electrode element, the electrode element including an electrode substrate and the electrode mixture layer provided on the electrode substrate, thereby forming an insulating layer on the electrode mixture layer of the electrode element. Furthermore, the method of manufacturing an insulating layer for an electrode includes a treating step of treating an electrode with a treatment solution, where the treatment solution contains an electrolyte and a nonaqueous solvent, and where the electrode includes the insulating layer formed in the insulating layer forming step.

Thus, in the method of manufacturing an insulating layer for an electrode according to the present embodiment, an insulating layer containing an inorganic oxide, a compound with a terminal hydroxyl group, and an electrolyte can be provided on the electrode mixture layer. The insulating layer thus obtained has an improved bonding property with respect to the electrode mixture layer, and the use of the insulating layer in the electrode can improve the peeling strength of the insulating layer. The use of an electrode having such an insulating layer in an electrochemical device enables the electrochemical device to maintain a high charge-discharge capacity.

### <Electrode Manufacturing Apparatus>

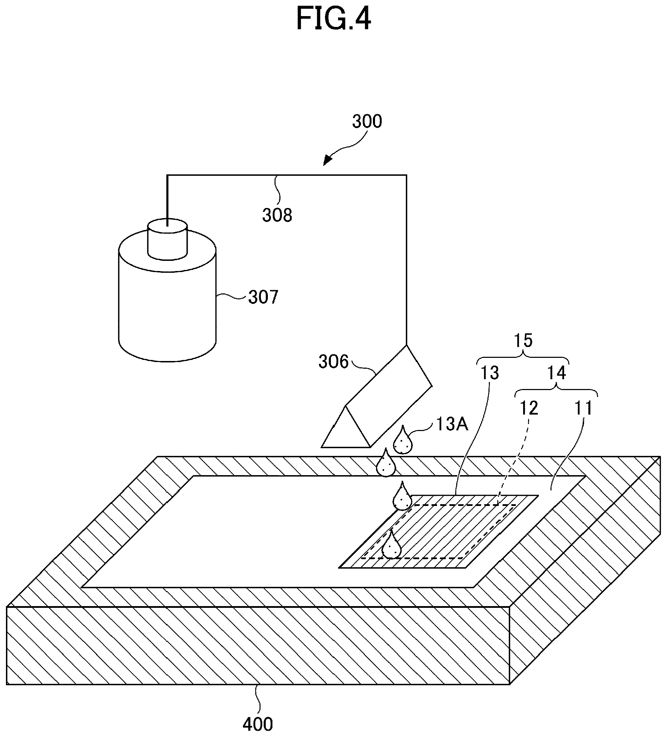

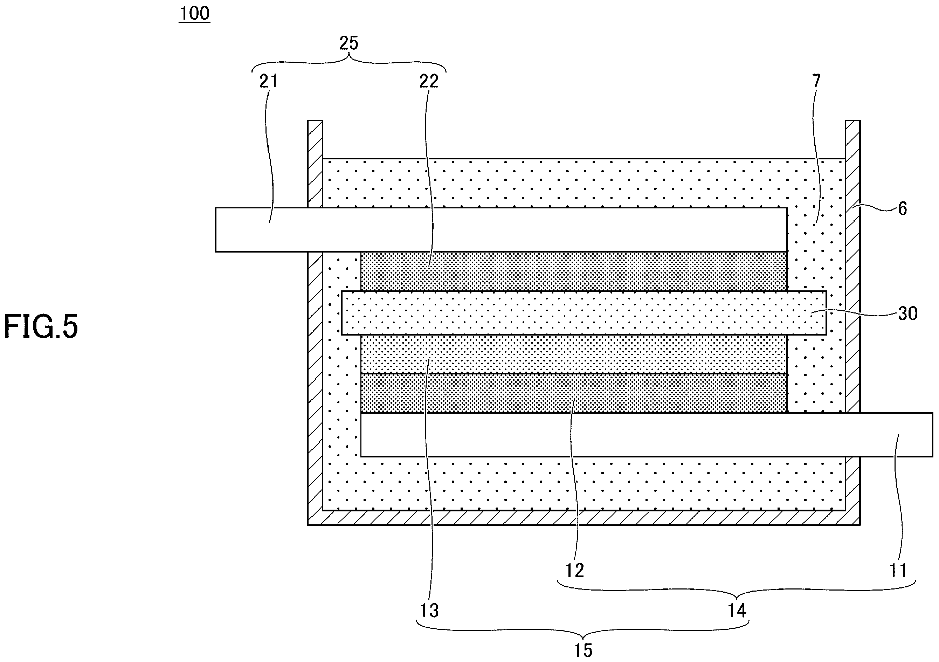

Figs. 4 and 5 are schematic diagrams illustrating an electrode manufacturing apparatus. The electrode manufacturing apparatus according to the present embodiment includes:
an insulating layer forming part configured to provide an insulating layer on an electrode mixture layer of an electrode element, where the insulating layer contains an inorganic oxide and a compound with a terminal hydroxyl group, and where the electrode element includes an electrode substrate and the electrode mixture layer provided on the electrode substrate; and
a treatment part configured to treat an electrode including the insulating layer with a treatment solution, where the treatment solution contains an electrolyte and a nonaqueous solvent, and where the insulating layer is provided by the insulating layer forming part. In the electrode manufacturing apparatus, the method of manufacturing an insulating layer for an electrode described above is performed.

In the example illustrated in Fig. 4, a negative electrode 15 is manufactured as an electrode. The electrode manufacturing apparatus illustrated in Fig. 4 constitutes a liquid discharge apparatus 300. The liquid discharge apparatus 300 is configured to discharge a liquid composition 13A for forming an insulating layer to an electrode element 14. The electrode element 14 is composed of a negative electrode mixture layer 12 provided on a negative electrode substrate 11. The liquid composition 13A for forming an insulating layer is stored in a tank 307 and supplied from the tank 307 to a liquid discharge head 306 via a tube 308 (Fig. 4).

In addition, the liquid discharge apparatus 300 may be provided with a mechanism to cap nozzles (not illustrated) of the liquid discharge head 306 in order to prevent the nozzles from drying while the liquid composition 13A for forming an insulating layer is not discharged from the liquid discharge head 306.

When the negative electrode 15 is manufactured, the electrode element is placed on a stage 400 that can be heated, and then the electrode element 14 is heated after the droplets of the liquid composition 13A for forming an insulating layer are ejected onto the electrode element 14. While the stage 400 is being heated, the stage 400 may move or the liquid discharge head 306 may move.

When the liquid composition 13A for forming an insulating layer, which is discharged onto the electrode element 14, is heated, the liquid composition 13A may be heated by the stage 400 or by a heating mechanism other than the stage 400.

As for the heating mechanism, there is no particular limitation unless the heating mechanism comes in direct contact with the liquid composition 13A for forming an insulating layer, and the heaters described above may be used, for example.

The heating temperature is not particularly limited as long as the heating temperature is at a temperature at which the dispersion medium can be volatilized, and the heating temperature is preferably in the range of 70 to 150°C in terms of power consumption.

In addition, when the liquid composition 13A for forming an insulating layer, which is discharged to the electrode element 14 is heated, the liquid composition 13A may be irradiated with ultraviolet light.

This provides an electrode (negative electrode) 15 that obtained by forming an insulating layer 13 on the electrode element 14 (Fig. 4).

The present embodiment illustrates an example in which the insulating layer 13 is formed on the electrode element 14, which has been obtained in advance by forming the negative electrode mixture layer 12 on the negative electrode substrate 11. However, the electrode element 14 on which the insulating layer 13 is to be formed may be fabricated by forming the negative electrode mixture layer 12 on the negative electrode substrate 11 in the same line as the apparatus illustrated in Fig. 4.

The liquid discharge apparatus 300 illustrated in Fig. 4 is an example of an insulating layer forming part constituting an electrode manufacturing apparatus according to the present embodiment.

In Fig. 5, an electrochemical device 100 is configured such that an electrode (negative electrode 15) provided with an insulating layer 13 formed by a liquid discharge apparatus 300 is opposite to a conductive electrode (positive electrode 25) via a separator (isolation layer) 30. The above-described treatment solution (solution containing a nonaqueous solvent and an electrolyte) is stored in a liquid bath 6, and the electrochemical device 100 is immersed in the liquid bath 6. In this state, a voltage is applied to the electrochemical device 100, thereby obtaining an electrode (negative electrode 15) having an insulating layer, which has been treated with the treatment solution.

The configuration in which a voltage is applied to the electrochemical device 100 immersed in the treatment solution of the liquid bath 6 illustrated in Fig. 5 is an example of a treatment part constituting the electrode manufacturing apparatus according to the present embodiment.

In the present embodiment, the configuration illustrated in Fig. 4 and the configuration illustrated in Fig. 5 are provided separately as different electrode manufacturing apparatuses, but each configuration may be provided in the same apparatus.

As described above, the electrode manufacturing apparatus according to the present embodiment includes an insulating layer forming part configured to apply the liquid composition for forming an insulating layer onto the electrode mixture layer of the electrode element, the electrode element including an electrode substrate and the electrode mixture layer provided on the electrode substrate, thereby forming an insulating layer on the electrode mixture layer of the electrode element. Furthermore, the electrode manufacturing apparatus includes a treatment part configured to treat the electrode including the insulating layer with a treatment solution, where the insulating layer is formed by the insulating layer forming part, and the treatment solution contains an electrolyte and a nonaqueous solvent.

Thus, in the electrode manufacturing apparatus according to the present embodiment, an insulating layer containing an inorganic oxide, a compound with a terminal hydroxyl group, and an electrolyte can be provided on the electrode mixture layer. The electrode thus obtained has an improved bonding property of the insulating layer with respect to the electrode mixture layer, and an improved peeling strength of the insulating layer provided on the electrode. Moreover, the use of such an electrode in an electrochemical device enables the electrochemical device to maintain a high charge-discharge capacity.

### <Electrochemical Device>

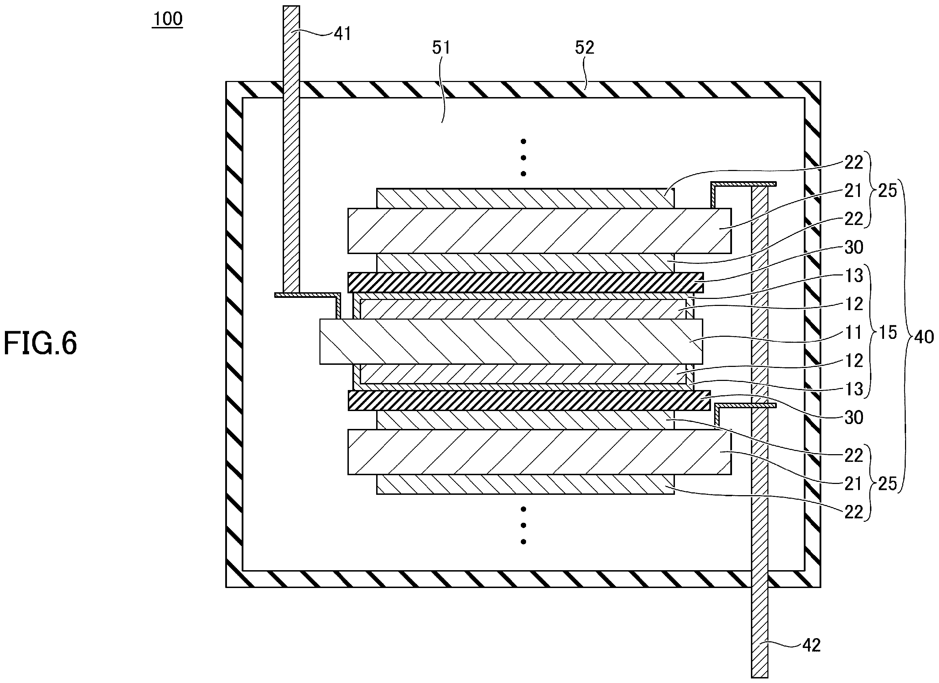

Fig. 6 is a schematic diagram illustrating an example of an electrochemical device according to the present embodiment. The electrochemical device according to the present embodiment includes the electrodes described above.

There are no particular restrictions on the shape of the electrochemical device using an electrode, and examples include a laminate type electrochemical device with flat electrodes layered on top of each other, a cylinder type electrochemical device with sheet electrodes and separators being spirally formed, a cylinder type electrochemical device with an inside-out structure combining pellet electrodes and separators, and a coin type electrochemical device with pellet electrodes and separators layered on top of each other.

In the electrochemical device 100, an electrolyte layer 51 is composed of a nonaqueous electrolyte formed on a laminated electrode 40, and sealed by an external package 52. In the electrochemical device 100, lead wires 41 and 42 are drawn to the outside of the external package 52.

In the laminated electrode 40, a negative electrode 15 and a positive electrode 25 are laminated via a separator 30. Herein, the positive electrodes 25 are layered on both sides of the negative electrode 15. The lead wire 41 is connected to the negative electrode substrate 11, and the lead wire 42 is connected to a positive electrode substrate 21.

In the negative electrode 15, a negative electrode mixture layer 12 and an insulating layer 13 are sequentially formed on each side of the negative electrode substrate 11.

In the positive electrode 25, positive electrode mixture layers 22 are formed on respective sides of the positive electrode substrate 21.

The number of negative electrodes 15 and the number of positive electrodes 25 of the laminated electrodes 40 may be the same or different.

The electrochemical device 100 may have other members as required.

### <Nonaqueous Electrolyte>

As the nonaqueous electrolyte, for example, a nonaqueous electrolytic solution can be used. Here, a nonaqueous electrolytic solution is an electrolytic solution in which an electrolyte salt is dissolved in a nonaqueous solvent.

Although there are no particular restrictions on the use of nonaqueous solvents in nonaqueous electrolytes, nonaqueous solvents appropriately selected from aprotic organic solvents can be used, as in the treatment solution.

### <Electrolyte Salts>

An electrolyte salt is not particularly limited insofar as an electrolyte salt has high ionic conductivity and can be dissolved in nonaqueous solvents.

Examples of cations constituting the electrolyte salt include lithium ions and the like.

The anions constituting the alkali metal salt preferably contain halogen atoms, such as BF₄-, PF₆-, AsF₆-, CF₃SO₃-, (CF₃SO₂)₂N-, (C₂F₅SO₂)₂N-, and the like.

The alkali metal salt is not particularly limited and can be appropriately selected according to the purpose, and examples include lithium hexafluorophosphate, lithium tetrafluoroborate, lithium hexafluoroarsenate, lithium trifluoromethanesulfonate, lithium bis(trifluoromethylsulfonyl)imide, lithium bis(pentafluoroethylsulfonyl)imide, and the like. These alkali metal salts may be used alone or in combination.

The concentration of the electrolyte salt in the nonaqueous electrolytic solution can be appropriately selected according to the purpose, and the concentration of the electrolyte salt in the nonaqueous electrolytic solution is preferably 1 mol/L or more, and 4 mol/L or less.

### <Applications of Electrochemical Devices>

Applications of electrochemical devices are not particularly limited, and examples include laptop computers, smart devices, e-book readers, portable faxes, portable copiers, portable printers, headphone stereos, portable video players, LCD TVs, handy cleaners, portable CDs, mini-discs, transceivers, electronic pocketbooks, calculators, memory cards, portable tape recorders, radios, backup power supplies, motors, lighting fixtures, toys, gaming devices, watches, strobes, cameras, and the like.

In the electrochemical device according to the present embodiment, as described above, the same effect as the electrode according to the present embodiment can be obtained by including the electrode according to the present embodiment in the electrochemical device. In the electrochemical device according to the present embodiment, the bonding property of the insulating layer with respect to the electrode mixture layer of the constituent electrode can be improved, and the peeling strength of the insulating layer provided on the electrode can be improved. In addition, the electrochemical device according to the present embodiment can maintain a high charge-discharge capacity.

### [Examples]

Examples in the present embodiment of the present invention are described below, but the invention is not limited to these examples. Note that "part" and "%" indicate mass standards unless otherwise specified.

### [Example 1]

### <Fabrication of Negative Electrode>

A slurry for a negative electrode mixture layer obtained by mixing a negative electrode active material SCMG-XRs (manufactured by Showa Denko Co., Ltd.), water, and resin was applied to both sides of a copper foil acting as a negative electrode substrate, using a comma coater, and was then dried to form a negative electrode mixture layer. Then, using a roll press, a pressure of 100 kN/m was applied to the negative electrode mixture layer to fabricate a negative electrode.

### <Fabrication of Positive Electrode>

A slurry for a positive electrode mixture layer obtained by mixing a positive electrode active material, lithium nickelate 503H (manufactured by JFE Minerals Ltd.), N-methylpyrrolidone, and resin was applied to both sides of an aluminum foil acting as a positive electrode substrate, using a comma coater, and was then dried to form a positive electrode mixture layer. Then, using a roll press, a pressure of 100 kN/m was applied to the positive electrode mixture layer to fabricate a positive electrode.

### <Preparation of Liquid Composition for Insulating layer>

40 parts of alumina powder AKP-3000 (Sumitomo Chemical Co., Ltd.) were added to a glass container while stirring a mixture consisting of 38.8 parts of ethyl lactate and 0.8 parts of Marialim SC-0708A (manufactured by NOF Corporation).

After stirring sufficiently, zirconia beads were added, and dispersion processing was performed in a ball mill for 72 hours or more to obtain an alumina dispersion. In another glass container, 0.4 parts of Epan 740 (manufactured by Daiichi Kogyo Pharmaceutical Co., Ltd.), 10 parts of ethyl lactate and 10.5 parts of hexylene glycol were added to obtain a base solution.

An alumina dispersion was added in small amounts while stirring the resulting base solution, and after stirring sufficiently, coarse particles were removed with a 5 µm membrane filter to obtain a liquid composition for an insulating layer of Example 1.

Table 1 lists the compounds with terminal hydroxyl groups that are used to prepare the liquid composition for the insulating layer. Dispersant and inorganic oxide particles used in the preparation are as follows.

### <Dispersant for Inorganic Oxide Particles>

- Marialim SC-0708A (manufactured by NOF Corporation)
- Marialim AAB-0851 (manufactured by NOF Corporation)
- Marialim SC-0505K (manufactured by NOF Corporation)
- Marialim AKM-0531 (manufactured by NOF Corporation)
- Marialim SC-1015F (manufactured by NOF Corporation)
- Marialim HKM-50A (manufactured by NOF Corporation)
- Marialim HKM-150A (manufactured by NOF Corporation)

### <Inorganic Oxide Particles>

- F-10 (manufactured by Showa Denko K.K.): Titanium oxide fine particles
- TZ-3YS (manufactured by Tosoh Corporation): Zirconia fine particles

### <Formation of Insulating layer>

The liquid composition for forming an insulating layer was discharged onto an electrode mixture layer by using a liquid discharge apparatus EV2500 (manufactured by Ricoh Co., Ltd.) and a liquid discharge head MH5421F (manufactured by Ricoh Co., Ltd.) to form an insulating layer, thereby obtaining a composite electrode. The amount of discharge from the IJ head was adjusted so that the basis weight of the insulating layer was 1.0 mg/cm².

### <Preparation of Treatment Liquid>

Lithium hexafluorophosphate (LiPFe) was dissolved to 1.5 mol/L and 1.0% vinylene carbonate in a nonaqueous solvent consisting of a mixture of ethylene carbonate, dimethyl carbonate and ethyl methyl carbonate at a weight ratio of 1:1:1 to prepare a treatment solution in Example 1.

### <Treatment of Insulating layer>

The prepared treatment solution was placed in a container, and the composite electrode including the insulating layer was immersed into the treatment solution. In addition, when the composite electrode has a positive electrode mixture layer, a negative electrode of a counter electrode is arranged through a separator, and when the composite electrode has a negative electrode mixture layer, a positive electrode of a counter electrode is arranged through a separator, and a power supply is connected to a lead wire at a portion of the electrode substrate of the composite electrode to apply voltage (see Fig. 5).

### <Fabrication of Lithium-Ion Secondary Battery (Electrochemical Device)>

With the lead wire of the positive electrode and the lead wire of the negative electrode not overlapping, 3 positive electrodes and 4 negative electrodes were alternately layered through a cellulose separator having a thickness of 16 µm to obtain an electrode element. Then, after interposing the electrode element between the aluminum laminate sheets, a surrounding area was sealed with a laminator, excluding an injection port, to form a bag-shaped external package. Next, the nonaqueous electrolyte LBG-00015 (manufactured by Kishida Chemical Co., Ltd.) was injected into the external package, and the injection port was sealed with a degassing sealer to obtain an electrochemical device of Example 1 (see Fig. 6).

### [Examples 2 to 7]

Electrochemical devices of Examples 2 to 7 were fabricated in the same manner as in the fabrication example of the electrochemical device of Example 1, except that an additive compound of the liquid composition for an insulating layer was replaced with materials of Table 2.

### [Examples 8 to 12]

Electrochemical devices of Examples 8 to 12 were fabricated in the same manner as in the fabrication example of the electrochemical device of Example 1, except that a dispersant for inorganic oxide particles in the liquid composition for an insulating layer was replaced with the material of Table 2.

### [Example 13]

An electrochemical device of Example 13 was fabricated in the same manner as in the fabrication example of the electrochemical device of Example 12, except that an insulating layer coating base material was replaced from being applied to the negative electrode to being applied to the positive electrode.

### [Examples 14 to 15]

Electrochemical devices of Examples 14 to 15 were fabricated in the same manner as in the fabrication example of the electrochemical device of Example 1, except that the voltage of the treating step was replaced by the conditions in Table 2.

### [Examples 16 to 23]

Electrochemical devices of Examples 16 to 23 were fabricated in the same manner as in the fabrication example of the electrochemical device of Example 1, except that an additive compound of the liquid composition for an insulating layer was replaced with the material of Table 2.

### [Example 24]

An electrochemical device of Example 24 was fabricated in the same manner except that lithium hexafluorophosphate in the treatment solution was replaced with lithium tetrafluoroborate (LiBF₄) in the fabrication example of the electrochemical device of Example 1.

### [Examples 25 to 26]

Electrochemical devices of Examples 25 to 26 were fabricated in the same manner as in the fabrication example of the electrochemical device of Example 1, except that the lithium hexafluorophosphate concentration in the treating step was replaced with conditions in Table 2.

### [Examples 27 to 28]

Electrochemical devices of Examples 27 to 28 were fabricated in the same manner as in the fabrication example of the electrochemical device of Example 1, except that the inorganic oxide particles in the liquid composition for an insulating layer were replaced with the materials in Table 2.

### [Examples 29 to 30]

Electrochemical devices of Examples 29 to 30 were fabricated in the same manner as in the fabrication example of the electrochemical device of Example 1, except that the dispersant for inorganic oxide particles in the liquid composition for an insulating layer was replaced with the materials of Table 2.

### [Comparative Examples 1 to 4]

Electrochemical devices of Comparative Examples 1 to 4 were fabricated in the same manner as in the fabrication example of the electrochemical device of Example 1, except that an additive compound of the liquid composition for an insulating layer was replaced with the materials of Table 2.

### [Comparative Example 5]

An electrochemical device of Comparative Example 5 was fabricated in the same manner as in the fabrication example of the electrochemical device of Example 1, except that no treating step was performed.

### [Comparative Example 6]

An electrochemical device of Comparative Example 6 was fabricated in the same manner as in the fabrication example of the electrochemical device of Example 1, except that lithium hexafluorophosphate was not added to the treatment solution.

### <Evaluations of Electrodes>

As evaluations of the electrodes, the peeling strength of the insulating layer and the cycle life of the prepared electrochemical devices were evaluated. The evaluation results are illustrated in Table 1.

### [Peeling Strength of Insulating Layer]

The composite electrode with the insulating layer treated was impregnated with dimethyl carbonate, washed, air-dried in a draft chamber for 48 hours, and then vacuum-dried at 25°C to remove solvent that had penetrated the electrode.

The dried composite electrode was fixed to a SUS plate with double-sided tape (Nitto Denko, No. 5000NS), cellophane tape (Nitto Denko, cellophane tape No. 29, width 18 mm) was attached to the insulating layer, and pressure was applied vertically with a hand roller to make the insulating layer and cellophane tape adhere to each other.

Then, the peeling force between the insulating layer and the active material layer was measured by peeling the cellophane tape at an angle of 90 degrees with respect to the sample, using an adhesive and film peeling analyzer (VPA-3S, manufactured by Kyowa Interface Science Co., Ltd.). The test speed was 30 mm/min for peeling. Measurements were made three times, and the mean value of the peeling force N divided by the width mm of the cellophane tape was taken as the peeling strength N/m, and the peeling strength was evaluated according to the following criteria. "A" was rated as the best result, while "C" and above were rated as good.

### [Evaluation Criteria for Peeling Strength of insulating layer]

| | | |
|---|---|---|
| A: | Peeling strength | 150 N/m or more |
| B: | Peeling strength | 80 N/m or less and less than 150 N/m |
| C: | Peeling strength | 30 N/m or less and less than 80 N/m |
| D: | Peeling strength | less than 30 N/m |

### [Initial Capacity Measurement]

The positive and negative lead wires of the electrochemical devices were connected to a charge-discharge test device, and a constant current-constant voltage charge was performed at a maximum voltage of 4.2 V and a C-rate of 0.2 C for 5 hours. After the charge was completed, the electrochemical devices were placed in a thermostatic chamber at 40°C for 5 days. Then, a constant current discharge was performed until the voltage reached 2.5 V at a C-rate of 0.2 C. Thereafter, a constant current-constant voltage charge was performed at a maximum voltage of 4.2 V and a C-rate of 0.2 C for 5 hours, followed by a constant current discharge being performed until the voltage reached 2.5 V at a C-rate of 0.2 C with a 10 minute pause. The discharge capacity at this point was defined as the initial capacity.

### [Battery Life Evaluation Test]

The positive and negative lead wires of the electrochemical devices whose initial capacity was measured were connected to a charge-discharge test device, and a constant current-constant voltage charge was performed at a maximum voltage of 4.2 V and a C-rate of 1 C for 3 hours. After the charge was completed, a constant discharge was performed until the voltage reached 2.5 V at a constant C-rate of 1 C.

The above process was repeated 1000 cycles with a 10 minute pause between cycles. After the repeated cycles were completed, a constant current-constant voltage charge was performed at a maximum voltage of 4.2 V and a C-rate of 0.2 C for 5 hours. After the charge was completed, a constant current discharge was performed until the voltage reached 2.5 V at a C-rate of 0.2 C with a 10 minute pause. The discharge capacity at this point was defined as the discharge capacity after the cycle, the cycle capacity retention (discharge capacity after the cycle/initial discharge capacity * 100) was calculated, and the battery life was evaluated according to the following criteria, where "A" was rated as the best result, while "C" and above were rated as good.

### [Evaluation Criteria for Lifetime Evaluation of Electrochemical Devices]

| | | |
|---|---|---|
| A: | Cycle capacity retention | at least 80% |
| B: | Cycle capacity retention | 70% or more and less than 80% |
| C: | Cycle capacity retention | 60% or more and less than 70% |
| D: | Cycle capacity retention | less than 60% |

**[Table 1]**

| PRODUCT NAME | MANUFACTURER | MOLECULAR WEIGHT | NUMBER OF TERMINAL OH-GROUP | STRUCTURE OF TERMINAL |
|---|---|---|---|---|
| EPAN 740 | DKS CO. LTD. | 3300 | 2 | -O-C₂H₄-OH |
| DBE-C25 | GELEST INC. | 3500 | 2 | -O-C₂H₄-OH |
| PEG600 | KANTO KAGAKU CO., INC | 600 | 2 | -O-C₂H₄-OH |
| PEG400 | KANTO KAGAKU CO., INC | 400 | 2 | -O-C₂H₄-OH |
| UNIOX G750 | NOF CORPORATION | 750 | 3 | -O-C₂H₄-OH |
| UNILUB 5TP-300KP | NOF CORPORATION | 4000 | 4 | -O-C₂H₄-OH |
| DMS-C21 | GELEST INC. | 4500 | 2 | -O-C₂H₄-OH |
| STEARYL ALCOHOL | NACALAI TESQUE, INC. | 270 | 1 | -(C₂H₄)₁₆-OH (ONE END) |
| DBP-C22 | GELEST INC. | 2500 | 2 | -O-C₃H₆-OH |
| X-22-4272 | SHIN-ETSU CHEMICAL CO., LTD. | - | 2 | -O-C₃H₆-OH |
| NISSO-PB GI3000 | NIPPON SODA CO., LTD. | 3000 | 2 | -C₃H₆-OH |
| NISSO-PB G3000 | NIPPON SODA CO., LTD. | 3000 | 2 | -C₃H₆-OH |
| PPG3000 | KANTO KAGAKU CO., INC | 3000 | 2 | -O-C₃H₆-OH |
| PPG400 | KANTO KAGAKU CO., INC | 400 | 2 | -O-C₃H₆-OH |
| PEG300 | KANTO KAGAKU CO., INC | 300 | 2 | -O-C₂H₄-OH |
| MPEM-1000 | DKS CO. LTD. | 1000 | 0 | -O-C₂H₄-O-CH₃ |
| PE-600 | DKS CO. LTD. | 600 | 0 | -O-C₂H₄-O-CH₃ |
| PMMA (SYNTHETIC) | - | 10000 | 0 | - |

**[Table 2]**

| | INSULATING LAYER LIQUID COMPOSITION | | | INSULATING LAYER COATING BASE MATERIAL | POST-TREATMENT PROCESS | | | EVALUATION RESULT | |
|---|---|---|---|---|---|---|---|---|---|
| | ADDITIVE COMPOUND | INORGANIC OXIDE PARTICLES | DISPERSANT | | ALKALI ELECTROLYTE SALT | CONCENTRATION [mol/L] | APPLIED VOLTAGE [V] | PEELING STRENGTH | LIFETIME |
| EXAMPLE 1 | EPAN 740 | AKP-3000 | SC-0708A | NEGATIVE ELECTRODE | LiPF₆ | 1.5 | 3 | A | A |
| EXAMPLE 2 | DBE-C25 | AKP-3000 | SC-0708A | NEGATIVE ELECTRODE | LiPF₆ | 1.5 | 3 | A | A |
| EXAMPLE 3 | PEG600 | AKP-3000 | SC-0708A | NEGATIVE ELECTRODE | LiPF₆ | 1.5 | 3 | A | A |
| EXAMPLE 4 | PEG400 | AKP-3000 | SC-0708A | NEGATIVE ELECTRODE | LiPF₆ | 1.5 | 3 | A | A |
| EXAMPLE 5 | UNIOX G750 | AKP-3000 | SC-0708A | NEGATIVE ELECTRODE | LiPF₆ | 1.5 | 3 | A | A |
| EXAMPLE 6 | UNILUB 5TP-300KP | AKP-3000 | SC-0708A | NEGATIVE ELECTRODE | LiPF₆ | 1.5 | 3 | A | A |
| EXAMPLE 7 | DMS-C21 | AKP-3000 | SC-0708A | NEGATIVE ELECTRODE | LiPF₆ | 1.5 | 3 | A | A |
| EXAMPLE 8 | EPAN 740 | AKP-3000 | AAB-0851 | NEGATIVE ELECTRODE | LiPF₆ | 1.5 | 3 | A | A |
| EXAMPLE 9 | EPAN 740 | AKP-3000 | AFB-1521 | NEGATIVE ELECTRODE | LiPF₆ | 1.5 | 3 | A | A |
| EXAMPLE 10 | EPAN 740 | AKP-3000 | SC-0505K | NEGATIVE ELECTRODE | LiPF₆ | 1.5 | 3 | A | A |
| EXAMPLE 11 | EPAN 740 | AKP-3000 | SC-1015F | NEGATIVE ELECTRODE | LiPF₆ | 1.5 | 3 | A | A |
| EXAMPLE 12 | EPAN 740 | AKP-3000 | AKM-0531 | NEGATIVE ELECTRODE | LiPF₆ | 1.5 | 3 | A | A |
| EXAMPLE 13 | EPAN 740 | AKP-3000 | AKM-0531 | POSITIVE ELECTRODE | LiPF₆ | 1.5 | 3 | A | A |
| EXAMPLE 14 | EPAN 740 | AKP-3000 | SC-0708A | NEGATIVE ELECTRODE | LiPF₆ | 1.5 | 2 | B | A |
| EXAMPLE 15 | EPAN 740 | AKP-3000 | SC-0708A | NEGATIVE ELECTRODE | LiPF₆ | 1.5 | 0 | C | A |
| EXAMPLE 16 | STEARYL ALCOHOL | AKP-3000 | SC-0708A | NEGATIVE ELECTRODE | LiPF₆ | 1.5 | 3 | C | C |
| EXAMPLE 17 | DBP-C22 | AKP-3000 | SC-0708A | NEGATIVE ELECTRODE | LiPF₆ | 1.5 | 3 | B | A |
| EXAMPLE 18 | X-22-4272 | AKP-3000 | SC-0708A | NEGATIVE ELECTRODE | LiPF₆ | 1.5 | 3 | B | A |
| EXAMPLE 19 | NISSO-PB GI3000 | AKP-3000 | SC-0708A | NEGATIVE ELECTRODE | LiPF₆ | 1.5 | 3 | B | A |
| EXAMPLE 20 | NISSO-PB G3000 | AKP-3000 | SC-0708A | NEGATIVE ELECTRODE | LiPF₆ | 1.5 | 3 | B | A |
| EXAMPLE 21 | PPG3000 | AKP-3000 | SC-0708A | NEGATIVE ELECTRODE | LiPF₆ | 1.5 | 3 | B | B |
| EXAMPLE 22 | PPG400 | AKP-3000 | SC-0708A | NEGATIVE ELECTRODE | LiPF₆ | 1.5 | 3 | C | B |
| EXAMPLE 23 | PEG300 | AKP-3000 | SC-0708A | NEGATIVE ELECTRODE | LiPF₆ | 1.5 | 3 | B | A |
| EXAMPLE 24 | EPAN 740 | AKP-3000 | SC-0708A | NEGATIVE ELECTRODE | LiBF₄ | 1.5 | 3 | B | A |
| EXAMPLE 25 | EPAN 740 | AKP-3000 | SC-0708A | NEGATIVE ELECTRODE | LiPF₆ | 0.7 | 3 | B | A |
| EXAMPLE 26 | EPAN 740 | AKP-3000 | SC-0708A | NEGATIVE ELECTRODE | LiPF₆ | 0.5 | 3 | C | A |
| EXAMPLE 27 | EPAN 740 | F-10 | SC-0708A | NEGATIVE ELECTRODE | LiPF₆ | 1.5 | 3 | B | B |
| EXAMPLE 28 | EPAN 740 | TZ-3YS | SC-0708A | NEGATIVE ELECTRODE | LiPF₆ | 1.5 | 3 | B | C |
| EXAMPLE 29 | EPAN 740 | AKP-3000 | HKM-50A | NEGATIVE ELECTRODE | LiPF₆ | 1.5 | 3 | C | A |
| EXAMPLE 30 | EPAN 740 | AKP-3000 | HKM-150A | NEGATIVE ELECTRODE | LiPF₆ | 1.5 | 3 | C | A |
| COMPARATIVE EXAMPLE 1 | NONE | AKP-3000 | SC-0708A | NEGATIVE ELECTRODE | LiPF₆ | 1.5 | 3 | D | A |
| COMPARATIVE EXAMPLE 2 | MPEM-1000 | AKP-3000 | SC-0708A | NEGATIVE ELECTRODE | LiPF₆ | 1.5 | 3 | D | C |
| COMPARATIVE EXAMPLE 3 | PE-600 | AKP-3000 | SC-0708A | NEGATIVE ELECTRODE | LiPF₆ | 1.5 | 3 | D | D |
| COMPARATIVE EXAMPLE 4 | POLYMETHYL METHACRYLATE | AKP-3000 | SC-0708A | NEGATIVE ELECTRODE | LiPF₆ | 1.5 | 3 | A | D |
| COMPARATIVE EXAMPLE 5 | EPAN 740 | AKP-3000 | SC-0708A | NEGATIVE ELECTRODE | - | - | - | D | A |
| COMPARATIVE EXAMPLE 6 | EPAN 740 | AKP-3000 | SC-0708A | NEGATIVE ELECTRODE | NONE | 0 | 3 | D | A |

Table 1 indicates that both peeling strenght and battery life were good in examples of lithium-ion secondary batteries using electrodes, each of which includes an electrode substrate, an electrode mixture layer provided on the electrode substrate, and an insulating layer provided on the electrode mixture layer, where the insulating layer contains an inorganic oxide, a compound with a terminal hydroxyl group, and an electrolyte (Examples 1 to 30).

However, in comparative examples of lithium-ion secondary batteries in which the insulating layer does not contain a compound with a terminal hydroxyl group, at least one of the peel strength and battery life was poor (Comparative Examples 1 to 6).

As described above, the embodiments of the present invention are not limited to specific embodiments, and various modifications and alterations are possible within the scope of the invention described in the claims.

### DESCRIPTION OF SIGNS

- 1: electrode substrate
- 2: electrode mixture layer
- 3: insulating layer
- 4: electrode element
- 5: electrode
- 6: liquid bath
- 7: treatment solution
- 11: negative electrode substrate
- 12: negative electrode mixture layer
- 13: insulating layer
- 13A: liquid composition for forming an insulation layer
- 15: negative electrode
- 21: positive electrode substrate
- 22: positive electrode mixture layer
- 25: positive electrode
- 30: separator
- 40: laminated electrode
- 41,42: lead wire
- 51: electrolyte layer
- 52: external package
- 100: electrochemical device
- 300: liquid discharge apparatus
- 400: stage

### [RELATED ART DOCUMENTS]

### [Patent Documents]

Patent Document 1: Japanese Unexamined Patent Application Publication No. 2000-277386
Patent Document 2: Japanese Patent No. 3953026

## Claims

1. An electrode comprising:
an electrode substrate;
an electrode mixture layer provided on the electrode substrate; and
an insulating layer provided on the electrode mixture layer, wherein the insulating layer includes an inorganic oxide, a compound with a terminal hydroxyl group, and an electrolyte.

2. The electrode according to claim 1, wherein the compound has a terminal hydroxyl group at two or more ends in a molecule.

3. The electrode according to claim 1 or 2, wherein the compound is an organic compound.

4. The electrode according to claim 1, wherein the compound has a structure represented by general formula (1) at least one end.
-O-C₂H₄-OH ----- (1)

5. The electrode according to claim 1, wherein a molecular weight of the compound is 200 or more.

6. The electrode according to claim 1, wherein the electrolyte contains hexafluorophosphate.

7. The electrode according to claim 1, wherein the inorganic oxide is an aluminum oxide.

8. An electrochemical device comprising:
the electrode according to claim 1.

9. A method of treating an electrode, the method comprising:
treating an electrode with a treatment solution, the treatment solution containing an electrolyte and a nonaqueous solvent, wherein
the electrode includes an electrode substrate, an electrode mixture layer provided on the electrode substrate, and an insulating layer provided on the electrode mixture layer, the insulating layer including an inorganic oxide, a compound with a terminal hydroxyl group, and the electrolyte.

10. The method according to claim 9, wherein the electrode is impregnated with the treatment solution.

11. The method according to claim 9 or 10, wherein with the electrode impregnated with the treatment solution, the electrode is opposite to a different electrode via an isolation layer, and a voltage of 2.0 V or more is applied.

12. The method according to claim 9, wherein the concentration of the electrolyte in the treatment solution is 0.7 mol/L or more.

13. A method of manufacturing an electrode, the method comprising:
an insulating layer forming step of applying a liquid composition for forming an insulating layer on an electrode mixture layer of an electrode element to form an insulating layer, the electrode element including an electrode substrate and the electrode mixture layer provided on the electrode substrate, and the liquid composition containing an inorganic oxide and a compound with a terminal hydroxyl group; and
a treating step of treating an electrode including the insulating layer with a treatment solution, the insulating layer being formed in the insulating layer forming step, and the treatment solution containing an electrolyte and a nonaqueous solvent.

14. An electrode manufacturing apparatus comprising:
an insulating layer forming part configured to provide an insulating layer on an electrode mixture layer of an electrode element, the insulating layer containing an inorganic oxide and a compound with a terminal hydroxyl group, and the electrode element including an electrode substrate and the electrode mixture layer provided on the electrode substrate; and
a treatment part configured to treat an electrode including the insulating layer with a treatment solution, the insulating layer being formed by the insulating layer forming part, and the treatment solution containing an electrolyte and a nonaqueous solvent.

15. An insulating layer comprising:
an inorganic oxide;
a compound with a terminal hydroxyl group; and
an electrolyte, wherein the insulating layer is provided on an electrode mixture layer of an electrode element, the electrode element including an electrode substrate and the electrode mixture layer.
